# EUROPÄISCHE PATENTSCHRIFT

(11) **EP 3 857 184 B1**
(45) Veröffentlichungstag und Bekanntmachung des Hinweises auf die Patenterteilung: **06.12.2023**
(21) Anmeldenummer: 19755902.4
(22) Anmeldetag: 19.08.2019
(51) Int. Cl.: G01F 23/284

(54) **DETEKTION VON SCHAUMBILDUNG EINES FÜLLGUTES IN EINEM BEHÄLTER BEI EINER FÜLLSTANDSMESSUNG**
DETECTION OF FOAM FORMATION OF A PRODUCT IN A CONTAINER DURING A FILL LEVEL MEASUREMENT
DÉTECTION DE FORMATION DE MOUSSE D'UN PRODUIT DE REMPLISSAGE DANS UN RÉCIPIENT LORS D'UNE MESURE DE NIVEAU DE REMPLISSAGE

(30) Priorität: 24.09.2018 DE 102018123432
(43) Veröffentlichungstag der Anmeldung: 04.08.2021
(73) Patentinhaber: Endress+Hauser SE+Co. KG, 79689 Maulburg (DE)
(72) Erfinder: MERLE, Jens, 79650 Schopfheim (DE); MALINOVSKIY, Alexey, 79689 Maulburg (DE); GORENFLO, Stefan, 79688 Hausen (DE); VOGEL, Markus, 79650 Schopfheim (DE)
(74) Vertreter: Koslowski, Christine Adelheid
(86) Internationale Anmeldenummer: PCT/EP2019/072075
(87) Internationale Veröffentlichungsnummer: WO 2020/064216

(56) Entgegenhaltungen:
- EP-A1- 2 418 465
- DE-A1-102012 104 858
- DE-A1-102017 100 269
- US-A1- 2003 033 869

## Beschreibung

Die Erfindung betrifft ein Verfahren zur Detektion von Schaumbildung eines Füllgutes in einem Behälter mittels eines Radar-basierten Füllstandsmessgerätes sowie ein Füllstandsmessgerät zur Ausführung dieses Verfahrens.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung beziehen sich der Begriff *"Radar"* auf Signale bzw. elektromagnetische Wellen mit Frequenzen zwischen 0.03 GHz und 300 GHz. Übliche Frequenzbänder, bei denen Füllstandsmessung durchgeführt wird, liegen bei 2, 6 GHz 26 GHz oder 78 GHz.

Im Fall von Radar-basierter Füllstandsmessung bildet das Pulslaufzeit-Prinzip ein etabliertes Messprinzip. Hierbei werden pulsförmige Mikrowellensignale zyklisch in Richtung des Füllguts ausgesandt und die Laufzeit bis zum Empfang des entsprechenden pulsförmigen Empfangssignals gemessen. Auf Basis dieses Messprinzips können Füllstandsmessgeräte mit vergleichsweise geringem schaltungstechnischem Aufwand realisiert werden. Ein Radar-basiertes Füllstandsmessgerät, welches nach dem Pulslaufzeit-Verfahren arbeitet, ist beispielsweise in der Offenlegungsschrift DE 10 2012 104 858 A1 sowie in der EP 2 418 465 A1 beschrieben.

Sofern eine komplexere Schaltungstechnik in Kauf genommen werden kann, bietet sich zur Radar-basierten Füllstandsmessung auch FMCW *("Frequency Modulated Continuous Wave"*) als Messprinzip an. Bezüglich eines typischen Aufbaus von FMCW-basierten Füllstandsmessgeräten sei exemplarisch auf die Offenlegungsschrift DE 10 2013 108 490 A1 verwiesen.

Das Messprinzip von FMCW- Radar basierten Entfernungsmessverfahren beruht darauf, das Mikrowellensignal zwar kontinuierlich, jedoch mit modulierter Frequenz auszusenden.

Dabei liegt die Frequenz des Mikrowellensignals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb des festgelegten Frequenzbandes ändert. Die zeitliche Änderung ist hierbei standardmäßig linear und weist eine Sägezahn- beziehungsweise Dreiecks-Form auf. Eine Sinus-förmige Änderung kann prinzipiell jedoch auch eingesetzt werden. Im Gegensatz zum Pulslaufzeit-Verfahren wird die Entfernung bzw. der Füllstand bei Implementierung des FMCW-Verfahrens auf Basis der instantanen Frequenzdifferenz zwischen dem aktuellen Empfangssignal und dem momentan ausgesendeten Mikrowellensignal bestimmt.

Neben frei abstrahlender Radar-Messung, bei der das Mikrowellensignal über eine Antenne abgestrahlt bzw. empfangen wird, existiert zudem unabhängig vom Pulslaufzeit-Verfahren oder FMCW die Variante des geführten Radars. Hierbei wird das Mikrowellensignal über eine elektrisch leitfähige Sonde (bspw. ein Koaxial-Kabel oder einen Metallstab), die in den Behälter hinuntergelassen ist, geführt. Am Ort der Füllgutoberfläche wird in der Sonde das Empfangssignal generiert und entlang der Sonde gen Füllstandsmessgerät reflektiert. Bekannt ist diese Variante der Radar-basierten Füllstandsmessung auch unter dem Begriff "*TDR*" ("*Time Domain Reflectometry*"). Vorteilhaft an dieser Variante ist, dass aufgrund der geführten Signalabstrahlung weniger Leistung zum Betrieb des Füllstandsmessgerätes erforderlich ist.

Bei jedem der oben genannten Messprinzipien (Pulslaufzeit und FMCW; unabhängig von geführter oder freier Abstrahlung) wird zur Ermittlung des Füllstandes anhand des Empfangssignals eine entsprechende Auswertungskurve aufgezeichnet. Im Falle des Pulsradar-basierten Verfahrens wird die Auswertungskurve aufgrund der hohen Pulsfrequenz durch Unterabtastung des reflektierten Empfangssignals erstellt. Dadurch bildet die Auswertungskurve das eigentliche, reflektierte Empfangssignal zeitgedehnt ab. Bei Implementierung des FMCW-Verfahrens wird die Auswertungskurve durch Mischen des momentan gesendeten Mikrowellensignals mit dem reflektierten Empfangssignal erstellt. Unabhängig vom Messprinzip spiegelt die Auswertungskurve die Amplitude des reflektierten Empfangssignals in Abhängigkeit der Messdistanz wieder.

Der Füllstand wird aus der Auswertungskurve durch Detektion und örtlicher Zuweisung des entsprechenden lokalen Maximums bestimmt. Im Idealfall existiert neben dem Maximum, dass durch die Füllgut-Oberfläche erzeugt ist, kein weiteres Maximum. Bedingt durch weitere reflektierende Oberflächen im Behälter-Inneren erscheinen neben dem Füllstands-Maximum in der Auswertungskurve in der Praxis weitere entsprechende Maxima. Für die Füllstandsmessung ist jedoch allein das Maximum, das durch die Füllgut-Oberfläche erzeugt wird, relevant. Weitere Informationen in der Auswertungskurve werden daher nach Möglichkeit herausgefiltert, um die Füllstandsmessung verlässlicher zu machen.

Je nach Prozessanlage kann es vorteilhaft sein, im Zuge der Füllstandsmessung weitere Ereignisse, wie Schaum- oder Ansatzbildung im Behälter, zu detektieren, um solchen Ereignissen eventuell gegensteuern zu können. Der Erfindung liegt daher die Aufgabe zugrunde, ein Füllstandsmessgerät bereitzustellen, mit dem neben dem Füllstand eine Schaumbildung im Zusammenhang mit der Füllstandsmessung detektierbar ist.

Die Erfindung löst diese Aufgabe durch ein Verfahren zur Detektion eines Ereignis-abhängigen Zustandes mittels eines Radar-basierten Füllstandsmessgerätes, das zur Messung eines Füllstandes eines in einem Behälter befindlichen Füllgutes dient. Das Verfahren umfasst folgende Verfahrensschritte, die in aufeinanderfolgenden Messzyklen wiederholt werden:
- Aussenden eines Mikrowellensignals in Richtung des Füllgutes,
- Empfang eines Empfangssignals nach Reflektion des Mikrowellensignals im Inneren des Behälters,
- Erstellung einer Auswertungskurve anhand von zumindest dem Empfangssignal, wobei die Auswertungskurve derart erstellt wird, dass eine Signalstärke des Empfangssignals in Abhängigkeit der Messdistanz wiedergegeben wird,
- Erfassung eines vordefinierten Kennwertes der Auswertungskurve innerhalb des Messbereichs oder zumindest eines vordefinierten Teilbereichs vom Messbereich.

Über fortschreitende Messzyklen wird erfindungsgemäß eine Änderung und/oder eine Streuung des Kennwertes ermittelt. Dabei wird der Ereignis-abhängige Zustand detektiert, sofern die Änderung bzw. die Streuung einen vordefinierten Grenzwert überschreitet.

Ein Ereignis-abhängiger Zustand ist im Sinne der Erfindung eine Schaumbildung. Bei Detektion eines solchen Ereignis-abhängigen Zustandes durch das Füllstandsmessgerät kann diese Information also beispielsweise der Prozessanlagen-Steuerung übermittelt werden, um hierauf basierend entsprechende Steuerbefehle, wie das Abstellen einer Heizung oder das Abstellen eines Rührwerkes, auszugeben.

Die erfindungsgemäße Lösung bietet somit den Vorteil, dass einer Anlagen-Steuerung automatisiert und ohne zusätzliche Messinstrumente das Auftreten von Schaumbildung im Behälter mitgeteilt werden kann. Somit kann die Betriebssicherheit der gesamten Prozess-Anlage erhöht werden.

Der Kennwert, aus der der Auswertungskurve erfasst wird, ist erfindungsgemäß zumindest in einem Teilbereich des Messbereichs die Fläche unter der Auswertungskurve. Somit ist es möglich, die aus diesem Teilbereich reflektierte Leistung des Empfangssignals zu bestimmen. Eine Abnahme der Leistung in einem weiter entfernten Teilbereich bis unterhalb eines entsprechenden Grenzwertes kann durch Schaumbildung hervorgehrufen werden.

Analog zum erfindungsgemäßen Verfahren wird die Aufgabe, die der Erfindung zugrunde liegt, außerdem durch ein Radar-basiertes Füllstandsmessgerät gelöst, das zur Durchführung des Verfahrens nach zumindest einer der zuvor genannten Ausführungsvarianten ausgeführt ist. Dementsprechend umfasst es folgende Komponenten:
- Eine Signalerzeugungs-Einheit, die ausgelegt ist, in aufeinanderfolgenden Messzyklen jeweils ein Mikrowellensignal in Richtung des Füllgutes auszusenden,
- Eine Empfangseinheit, die konzipiert ist, um nach Reflektion des Mikrowellensignals im Inneren des Behälters ein Empfangssignal zu empfangen,
- eine Auswertungseinheit, die ausgelegt ist, um
   ∘ anhand von zumindest dem Empfangssignal pro Messzyklus eine Auswertungskurve, die eine Signalstärke des Empfangssignals in Abhängigkeit der Messdistanz wiedergibt, zu erstellen,
   ∘ innerhalb zumindest eines festgelegten Teilbereichs des Messbereichs eine Fläche unter der Auswertungskurve zu erfassen,
   ∘ über fortschreitende Messzyklen eine Änderung und/oder eine Streuung der Fläche zu ermitteln,
   ∘ Schaumbildung zu detektieren, sofern die Änderung bzw. die Streuung einen vordefinierten Grenzwert überschreitet,
   ∘ zumindest sofern die Änderung bzw. die Streuung einen vordefinierten Grenzwert nicht überschreitet, mittels der Auswertungskurve den Füllstand zu bestimmen.

Unter dem Begriff *"Einheit"* wird im Rahmen der Erfindung prinzipiell jede elektronische Schaltung verstanden, die für ihren Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

In einer weitergehenden Ausführungsform des Füllstandsmessgerätes kann die Auswertungseinheit vorzugsweise so ausgelegt werden, dass bei Über- bzw. Unterschreitung des Grenzwertes das Auftreten des spezifischen Ereignis-Zustandes, insbesondere graphisch oder als elektrisches Signal, ausgegeben wird. Ein entsprechendes elektrisches Signal kann beispielsweise mittels eines geeigneten Bussystems an die Anlagen-Steuerung übermittelt werden.

Auch ist es möglich, das Füllstandsmessgerät je nach Definition des Ereignis-abhängigen Zustandes so auszulegen, dass, sofern die Änderung bzw. die Streuung den vordefinierten Grenzwert über- bzw. unterschreitet, kein neuer Füllstandswert aus der aktuellen Auswertungskurve bestimmt wird.

Zudem ist es von Vorteil, wenn der Teilbereich zur Erfassung des Kennwertes manuell am Füllstandsmessgerät konfigurierbar ist. Somit lässt sich das Füllstandsmessgerät an den jeweiligen Behälter bzw. an das jeweilige Füllgut anpassen. Sofern beispielsweise die Antenne aufgrund von staubhaltigem oder feuchtem Füllgut zu Ansatzbildung neigt, kann der Teilbereich manuell an die Stelle des Messbereichs gesetzt werden, die an die Antenne angrenzt. Falls in der Mitte des Behälters bzw. des Messbereichs ein Rührwerk vorhanden ist, so kann der Teilbereich, in dem der Kennwert ermittelt werden soll, an diese Stelle des Messbereichs gesetzt werden.

Anhand der nachfolgenden Figuren wird die Erfindung näher erläutert. Es zeigt:
Fig. 1: Eine Anordnung eines Radar-Füllstandsmessgerätes,
Fig. 2: einen schaltungstechnischen Aufbau des Füllstandsmessgerätes, und
Fig. 3: eine erfindungsgemäße Auswertungskurve.

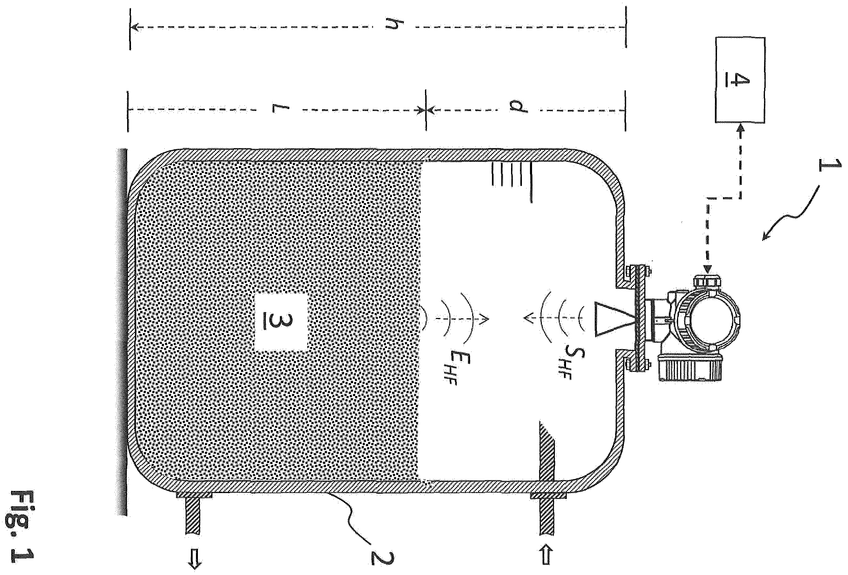

Zum Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Radar ausgelegt ist, umfasst es eine entsprechende Antenne. Dabei kann die Antenne, wie angedeutet, beispielswiese als Hornantenne ausgelegt sein. Insbesondere bei Radar-Frequenzen oberhalb von 100 GHz kann die Antenne auch als Planar-Antenne realisiert sein. Unabhängig von der Bauform ist die Antenne so ausgerichtet, dass entsprechende Mikrowellensignale S_{HF} in Richtung des Füllgutes 3 ausgesendet werden.

An der Oberfläche des Füllgutes 3 werden die Mikrowellensignale S_{HF} reflektiert und nach einer korrespondierenden Signallaufzeit an der Antenne des Füllstandsmessgerätes 1 entsprechend als Empfangssignale E_{HF} empfangen. Hierbei hängt die Signallaufzeit der Mikrowellensignale S_{HF}, E_{HF} von der Entfernung d = h - L des Füllstandsmessgerätes 1 zur Füllgut-Oberfläche ab.

Oftmals unterläuft das Füllgut 3 während der Füllstandsmessung eine chemische Reaktion, einen Mahl- oder einen Rührprozess. Daher weist das Füllgut 3 entgegen der in Fig. 1 gezeigten Darstellung gegebenenfalls eine schäumende Füllgut-Oberfläche auf. Bedingt durch hohe Temperaturen oder staubhaltige Atmosphäre kann sich zudem Ansatz an der Behälter-Innenwand oder an der Antenne bilden. Dementsprechend können solche Zustände im Zuge der Füllstandsmessung zur Ermittlung eines ungenauen oder falschen Füllstandswertes L führen. Daher ist es zum Betrieb der Prozessanlage vorteilhaft, die einzelnen Zustände erkennen zu können, um im simpelsten Fall eine chemische Reaktion, beispielsweise bei ungewollter Schaumbildung, zu stoppen, indem ein Zufluss gestoppt oder eine Heizung heruntergeregelt wird.

Erfindungsgemäß kann Schaumbildung anhand der vom Füllstandsmessgerät 1 erstellten Auswertungskurve ZF₁, ZFₙ erkannt werden. Dabei erstellt das Füllstandsmessgerät 1 die Auswertungskurve ZF₁, ZFₙ bei Implementierung des FMCW-Verfahrens prinzipiell durch Mischen des momentan empfangenen Empfangssignals E_{HF} mit dem derzeit ausgesendeten Mikrowellensignal S_{HF}, wobei das Mikrowellensignal S_{HF} hierzu kontinuierlich und innerhalb des Frequenzbandes mit sägezahnförmiger Frequenz-Änderung ausgesendet wird.

Im Fall des Pulslaufzeit-Verfahrens wird die Auswertungskurve ZF₁, ZFₙ durch Unterabtastung des pulsförmigen Empfangssignals E_{HF} erstellt, wobei die Pulsfrequenz des Abtastsignals hierzu geringfügig von der Pulsfrequenz des Mikrowellensignals S_{HF} bzw. des Empfangssignals E_{HF} abweicht.

Sowohl bei FMCW, als auch beim Pulslaufzeit-Verfahren stellt die Auswertungskurve ZF₁, ZFₙ die Signalamplitude A des Empfangssignals E_{HF} in Abhängigkeit der Messdistanz d wieder. Im Falle der Füllstandsmessung erstreckt sich der korrespondierende Messbereich h dementsprechend von der Antenne des Füllstandsmessgerätes 1 bis zum Boden des Behälters 2. Den Füllstand L kann das Füllstandsmessgerät 1 anhand der Auswertungskurve ZF₁, ZFₙ ermitteln, da die Reflektion des Mikrowellensignals S_{HF} an der Füllgut-Oberfläche in der Auswertungskurve ZF₁, ZFₙ ein lokales Maximum A_{m,1}, A_{m,n} erzeugt. Da das Füllstandsmessgerät 1 ausgelegt ist, um zu dem lokalen Maximum A_{m,1}, A_{m,n} den korrespondierenden Abstand d zu ermitteln, kann das Füllstandsmessgerät 1 hieraus den Füllstand L berechnen.

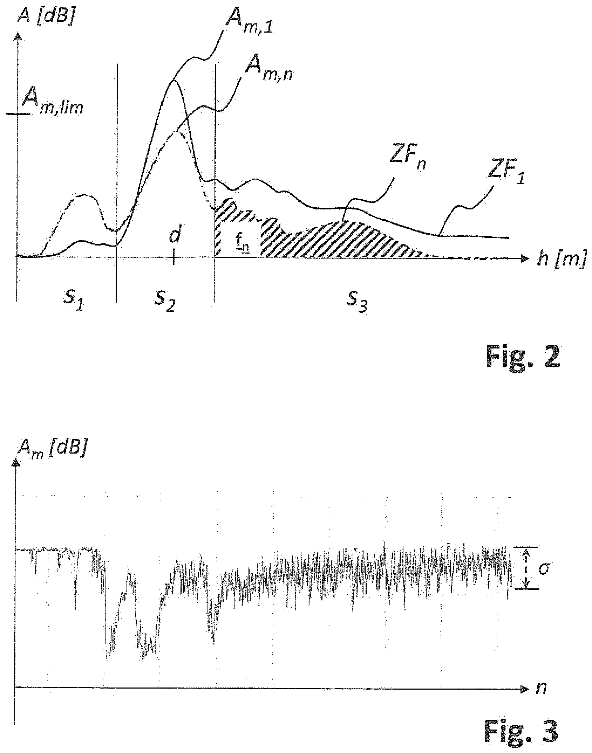

In Fig. 2 sind zwei Auswertungskurven ZF₁, ZFₙ, die in einem ersten Messzyklus 1 sowie einem späteren Messzyklus n aufgenommen sind, schematisch dargestellt. Anhand dieser zwei Auswertungskurven ZF₁, ZFₙ wird das erfindungsgemäße Verfahren zur Detektion einer Schaumbildung näher veranschaulicht: Wie erkennbar wird, ist der Messbereich h im vorliegenden Fall in drei Teilbereiche s₁, s₂, s₃ untergliedert, bei denen der erste Teilbereich s₁ an die Antenne des Füllstandsmessgerätes 1 anschließt. Der dritte Teilbereich s₃ grenzt an den Behälterboden. In dem zweiten, mittleren Teilbereich s₂ weisen die Auswertungskurven ZF₁, ZFₙ an der Messdistanz d, die der Füllgut-Oberfläche entspricht, jeweils ein Reflexions-Maximum mit entsprechenden Amplituden A_{m,1} A_{m,n} auf. Dieses Maximum zieht das Füllstandsmessgerät 1 zur Bestimmung des Füllstandes L heran.

Erfindungsgemäß wird zur Detektion von Schaumbildung der Effekt genutzt, dass sich die Auswertungskurve ZF₁, ZFₙ, mit fortschreitenden Messzyklen n zumindest in einzelnen Teilbereichen s₁, s₂, s₃ verändert. Eine Verringerung der Fläche fₙ hin zu fortschreitenden Messzyklen n, wie es im dritten Teilbereich s₃ der Auswertungskurve ZFₙ visualisiert ist, kann beispielsweise durch eine Schaumbildung des Füllgutes 3 bedingt sein. Erfindungsgemäß kann daher bei diesem Ereignis-Zustand die Fläche fₙ im dritten Teilbereich s₃ unterhalb der Auswertungskurven ZF₁, ZFₙ als Kennwert definiert werden, wobei vom Füllstandsmessgerät 1 außerdem mit fortschreitenden Messzyklen n die etwaige Änderung der Fläche fₙ in diesem Teilbereich s₃ ermittelt wird. Wenn als Grenzwert eine zuvor definierte Mindestfläche unterschritten wird, kann das Füllstandsmessgerät 1 hieraus ableiten, dass als konkreter Ereignis-abhängiger Zustand eine Schaumbildung eingetreten ist. In diesem Zusammenhang bietet es sich erfindungsgemäß an, das Füllstandsmessgerät 1 so auszulegen, dass die Anzahl und die jeweilige Position der Teilbereiche s₁, s₂, s₃ manuell an den jeweiligen Behälter 2 bzw. das Füllgut 3 angepasst werden kann.

Neben der Fläche fₙ kann, nicht gemäß der vorliegenden Erfindung, auch die Amplitude A_{m,1}, A_{m,n} des Füllstands-Maximums als Kennwert herangezogen werden: Eine Unterschreitung der Amplitude A_{m,n} unter eine vordefinierte Mindest-Amplitude A_{m,min} kann beispielsweise einer Schaumbildung als Ereignis-abhängigem Zustand zugeordnet werden. Andere Ursachen für eine Abschwächung der Amplitude A_{m,1}, A_{m,n} des Füllstands-Maximums können z.B. im Aufkochen des Füllgutes 3 bzw. einer Änderung des dielektrischen Wertes des Füllgutes 3 liegen.

Alternativ zu der Fläche fₙ oder der Amplitude A_{m,i}, A_{m,n} kann, nicht gemäß der vorliegenden Erfindung, auch die Anzahl der Maxima (im dritten Teilbereich s₃) als Kennwert zur Überwachung über die Messzyklen n herangezogen werden. Eine Verringerung der Anzahl an peripheren Maxima in der Auswertungskurve ZF₁, ZFₙ mit steigenden Messzyklen n kann durch das Füllstandsmessgerät 1 wiederum als Schaumbildung interpretiert werden.

Eine mit den Messzyklen n zunehmende Fläche bzw. Amplitude der Auswertungskurve ZF₁, ZFₙ im ersten Teilbereich s₁ kann hingegen, sofern diese Fläche als zu überwachender Kennwert definiert ist, bei Übersteigen eines entsprechenden Grenzwertes durch das Füllstandsmessgerät 1 als Ansatzbildung an der Antenne detektiert werden.

Nicht nur eine Änderung eines möglichen Kennwertes, sondern auch dessen Streuung σ über die vergangenen Messzyklen n kann erfindungsgemäß herangezogen werden, um Schaumbildung zu detektieren. Beispielshaft dargestellt ist dies anhand der Streuung σ der Amplitude Aₘ des Füllstands-Maximums in Fig. 3. Dabei ist der Begriff "*Streuung"* nicht auf eine spezielle mathematische Definition wie die Varianz oder die mittlere quadratische Abweichung beschränkt. Sofern das Füllstandsmessgerät 1 als Kennwert eine Streuung σ der Amplitude ermittelt, die wiederum oberhalb eines vorbestimmten Grenzwertes liegt, so kann das Füllstandsmessgerät 1 als Ereignis-abhängigen Zustand, nicht gemäß der vorliegenden Erfindung, den Betrieb eines Rührwerkes im Inneren des Behälters 2 detektieren. Umgekehrt kann das Unterschreiten der Streuung σ vom Füllstandsmessgerät 1 als Ausfall des Rührwerkes interpretiert werden.

Je nachdem, wie hoch der Grenzwert für die Streuung σ gewählt ist, kann bei Überschreiten der Streuung σ als Ereignis-abhängiger Zustand eine Schaumbildung zugeordnet werden. Es versteht sich von selbst, dass neben der Amplitude A_{m,1}, A_{m,n} auch die Streuung σ anderer Kennwerte, wie die Streuung der Fläche fₙ über vorangehende Messzyklen n ermittelt werden kann.

Sofern das Füllstandsmessgerät 1 eine Schaumbildung detektiert, kann es dies einerseits nutzen, um den aus der Auswertungskurve ZF₁, ZFₙ ermittelten Füllstandswert L als nicht vertrauenswürdige Falschmessung zu deklarieren bzw. zu löschen.

Andererseits kann das Füllstandsmessgerät 1 bei Detektion einer Schaumbildung diese an die übergeordnete Einheit 4 übermitteln. Hierdurch kann gegebenenfalls auf die Schaumbildung reagiert werden, bspw. durch Abschalten einer Pumpe oder einer Heizung in der Prozessanlage. Hierzu muss das Füllstandsmessgerät 1 so ausgelegt sein, um im Falle einer Schaumbildung ein entsprechendes elektrisches Signal mittels eines geeigneten Bus-Protokolls auszugeben. Natürlich kann bei Vorhandensein eines Displays oder einer sonstigen (Leucht-) Anzeige am Füllstandsmessgerät 1 eine Schaumbildung auch graphisch angezeigt werden.

### Bezugszeichenliste

- 1: Füllstandsmessgerät
- 2: Behälter
- 3: Füllgut
- 4: Übergeordnete Einheit
- A: Amplitude
- d: Messdistanz
- E_{HF}: Empfangssignale
- fₙ: Fläche unter der Auswertungskurve
- h: Einbauhöhe bzw. Messbereich
- L: Füllstand
- n: Messzyklus
- S_{HF}: Mikrowellensignale
- s_{1,2,3}: Teilbereiche des Messbereichs
- ZF_{1,n}: Auswertungskurven
- σ: Streuung

## Patentansprüche

1. Verfahren zur Detektion von Schaumbildung eines Füllgutes (3) in einem Behälter (2) mittels eines Radar-basierten Füllstandsmessgerätes (1), das zur Messung eines Füllstandes (L) des Füllgutes (3) im Behälter (2) dient, wobei das Verfahren folgende Verfahrensschritte, die in aufeinanderfolgenden Messzyklen (n) wiederholt werden, umfasst:
- Aussenden eines Mikrowellensignals (S_{HF}) in Richtung des Füllgutes (3),
- Empfang eines Empfangssignals (E_{HF}) nach Reflektion des Mikrowellensignals (S_{HF}) im Inneren des Behälters (2),
- Erstellung einer Auswertungskurve (ZF) anhand von zumindest dem Empfangssignal (E_{HF}), wobei die Auswertungskurve (ZF) derart erstellt wird, dass eine Signalstärke (A) des Empfangssignals (E_{HF}) in Abhängigkeit der Messdistanz (d) wiedergegeben wird,
**gekennzeichnet durch**:
- Erfassung der Fläche (fₙ) in zumindest einem Teilbereich (s₁, s₂, s₃) unter der Auswertungskurve (ZFₙ),
wobei über fortschreitende Messzyklen (n) eine Änderung und/oder eine Streuung (σ) der Fläche (fₙ) ermittelt wird,
wobei Schaumbildung detektiert wird, sofern die Änderung bzw. die Streuung (σ) einen vordefinierten Grenzwert (A_{m,lim}) überschreitet.

2. Radar-basiertes Füllstandsmessgerät ausgeführt zur Durchführung des Verfahrens nach
Anspruch 1, folgende Komponenten umfassend:
- Eine Signalerzeugungs-Einheit, die ausgelegt ist, in aufeinanderfolgenden Messzyklen (n) jeweils ein Mikrowellensignal (S_{HF}) in Richtung des Füllgutes (3) auszusenden,
- Eine Empfangseinheit, die konzipiert ist, um nach Reflektion des Mikrowellensignals (S_{HF}) im Inneren des Behälters (2) ein Empfangssignal (E_{HF}) zu empfangen,
- eine Auswertungseinheit, die ausgelegt ist, um
∘ anhand von zumindest dem Empfangssignal (E_{HF}) pro Messzyklus (n) eine Auswertungskurve (ZF), die eine Signalstärke (A) des Empfangssignals (E_{HF}) in Abhängigkeit der Messdistanz (d) wiedergibt, zu erstellen,
∘ innerhalb zumindest eines festgelegten Teilbereichs (s₁, s₂, s₃) des Messbereichs (h) eine Fläche (fₙ) unter der Auswertungskurve (ZF) zu erfassen,
∘ über fortschreitende Messzyklen (n) eine Änderung und/oder eine Streuung (σ) der Fläche (fₙ) zu ermitteln,
∘ Schaumbildung zu detektieren, sofern die Änderung bzw. die Streuung (σ) einen vordefinierten Grenzwert (A_{m,lim}) überschreitet,
∘ zumindest, sofern die Änderung bzw. die Streuung (σ) einen vordefinierten Grenzwert (A_{m,lim}) nicht überschreitet, mittels der Auswertungskurve (ZF) den Füllstand (L) zu bestimmen.

3. Füllstandsmessgerät nach Anspruch 2, wobei die Auswertungseinheit ausgelegt ist, um das Auftreten von Schaumbildung, insbesondere graphisch oder als elektrisches Signal, auszugeben.

4. Füllstandsmessgerät nach Anspruch 2 oder 3, wobei der Teilbereich (s₁, s₂, s₃) zur Erfassung des Kennwertes (Aₘ, f) manuell konfigurierbar ist.

## Claims

1. A method for detecting foam formation of a filler (3) in a container (2) by means of a radar-based fill-level measuring device (1) which serves for measuring a fill level (L) of the filler (3) in the container (2), the method comprising the following method steps which are repeated in successive measurement cycles (n):
- Emitting a microwave signal (S_{HF}) in the direction of the filler (3),
- Receiving a receive signal (E_{HF}) after reflection of the microwave signal (S_{HF}) inside the container (2),
- Generating an analysis curve (ZF) on the basis of at least the receive signal (E_{HF}), wherein the analysis curve (ZF) is generated such that a signal strength (A) of the receive signal (E_{HF}) is reproduced as a function of the measuring distance (d),
**characterized by**:
- Detecting the surface area (fₙ) within at least one sub-region (s₁, s₂, s₃) under the analysis curve (ZFₙ),
wherein a change and/or a dispersion (σ) of the surface area (fₙ) is ascertained over proceeding measurement cycles (n),
wherein
foam formation is detected when the change or the dispersion (σ) exceeds a predefined threshold (A_{m,lim}).

2. A radar-based fill-level measuring device designed to carry out the method as claimed in claim 1, comprising the following components:
- A signal generating unit configured to respectively emit a microwave signal (S_{HF}) in the direction of the filler (3) in successive measurement cycles (n),
- A receiving unit designed to receive a receive signal (E_{HF}) after reflection of the microwave signal (S_{HF}) inside the container (2),
- an evaluation unit which is configured
- to generate, on the basis of at least the receive signal (E_{HF}), per measurement cycle (n), an analysis curve (ZF) representing a signal strength (A) of the receive signal (E_{HF}) as a function of the measuring distance (d),
- to detect a surface area (fₙ) under the analysis curve (ZF) within at least one defined sub-region (s₁, s₂, s₃) of the measurement region (h),
- to ascertain a change and/or a dispersion (σ) of the surface area (fₙ) over proceeding measurement cycles (n),
- to detect foam formation when the change or dispersion (σ) exceeds a predefined threshold (A_{m,lim}) ,
- to determine the fill level (L) by means of the analysis curve (ZF) at least if the change or dispersion (σ) does not exceed a predefined threshold (A_{m,lim}) .

3. The fill-level measuring device as claimed in claim 2, wherein the evaluation unit is designed to output the occurrence of foam formation, in particular graphically or as an electrical signal.

4. The fill-level measuring device as claimed in claim 2 or 3, wherein the sub-region (s₁, s₂, s₃) for detecting the characteristic value (Aₘ, f) is manually configurable.

## Revendications

1. Procédé destiné à la détection d'une formation de mousse d'un produit (3) dans un réservoir (2) au moyen d'un transmetteur de niveau (1 ) basé sur un radar, lequel transmetteur sert à mesurer un niveau (L) du produit (3) dans le réservoir (2), le procédé comprenant les étapes de procédé suivantes, lesquelles sont répétées dans des cycles de mesure successifs (n) :
- Émission d'un signal micro-ondes (S_{HF}) en direction du produit (3),
- Réception d'un signal de réception (E_{HF}) après réflexion du signal micro ondes (S_{HF}) à l'intérieur du réservoir (2),
- Création d'une courbe d'évaluation (ZF) à l'aide d'au moins le signal de réception (E_{HF}), la courbe d'évaluation (ZF) étant créée de telle sorte qu'une intensité de signal (A) du signal de réception (E_{HF}) est reproduite en fonction de la distance de mesure (d),
**caractérisé par** :
- La détection de la surface (fₙ) dans au moins une zone partielle (s₁, s₂, s₃) sous la courbe d'évaluation (ZFₙ),
une modification et/ou une dispersion (σ) de la surface (fₙ) étant déterminée sur des cycles de mesure (n) progressifs,
une formation de mousse étant détectée dans la mesure où la modification ou la dispersion (σ) dépasse une valeur limite (A_{m,lim}) prédéfinie.

2. Transmetteur de niveau basé sur un radar, lequel transmetteur est conçu pour la mise en oeuvre du procédé selon la revendication 1, lequel transmetteur comprend les composants suivants :
- Une unité de génération de signaux, laquelle est conçue pour émettre un signal micro-ondes (S_{HF}) en direction du produit (3) dans des cycles de mesure successifs (n),
- Une unité de réception, laquelle est conçue pour recevoir un signal de réception (E_{HF}) après réflexion du signal micro-ondes (S_{HF}) à l'intérieur du réservoir (2),
- Une unité d'évaluation, laquelle est conçue pour
∘ à l'aide d'au moins le signal de réception (E_{HF}), établir par cycle de mesure (n) une courbe d'évaluation (ZF) qui reproduit une intensité de signal (A) du signal de réception (E_{HF}) en fonction de la distance de mesure (d),
∘ saisir, à l'intérieur d'au moins une zone partielle définie (s₁, s₂, s₃) de la zone de mesure (h), une surface (fₙ) sous la courbe d'évaluation (ZF),
∘ déterminer une modification et/ou une dispersion (σ) de la surface (fₙ) sur des cycles de mesure (n) progressifs
∘ détecter la formation de mousse, dans la mesure où la modification ou la dispersion (σ) dépasse une valeur limite (A_{m,lim}) prédéfinie,
∘ au moins, dans la mesure où la modification ou la dispersion (σ) ne dépasse pas une valeur limite prédéfinie (A_{m,lim}), pour déterminer le niveau (L) à l'aide de la courbe d'évaluation (ZF).

3. Transmetteur de niveau selon la revendication 2, pour lequel l'unité d'évaluation est conçue pour signaler l'apparition d'une formation de mousse, notamment sous forme graphique ou de signal électrique.

4. Transmetteur de niveau selon la revendication 2 ou 3, pour lequel la zone partielle (s₁, s₂, s₃) pour la saisie de la valeur caractéristique (Aₘ, f) peut être configurée manuellement.
